# EUROPEAN PATENT SPECIFICATION

(11) **EP 1 838 432 B1**
(45) Date of publication and mention of the grant of the patent: **30.06.2010**
(21) Application number: 06700542.1
(22) Date of filing: 06.01.2006
(51) Int. Cl.: B01J 19/00

(54) **AUTOMATED PROCESS FOR PERFORMING CONSECUTIVE REACTION INVOLVING WEIGHTING OF MATERIAL**
AUTOMATISIERTES VERFAHREN ZUR DURCHFÜHRUNG EINER FOLGEREAKTION MIT MATERIALGEWICHTUNG
PROCESSUS AUTOMATISÉ POUR RÉALISER UNE RÉACTION CONSÉCUTIVE IMPLIQUANT LA PESÉE DE MATÉRIAU

(30) Priority: 19.01.2005 GB 0501100
(43) Date of publication of application: 03.10.2007
(73) Proprietor: INEOS EUROPE LIMITED, Lyndhurst Hampshire SO43 7FG (GB)
(72) Inventor: ALLEN, Katharine Mary, Walton-on-Thames, Surrey KT12 1JW (GB)
(74) Representative: King, Alex
(86) International application number: PCT/GB2006/000033
(87) International publication number: WO 2006/077375

(56) References cited:
- EP-A- 0 693 310
- WO-A-02/053273
- WO-A-2004/054700
- US-A- 4 627 506
- US-A- 4 725 149
- US-A- 6 141 977
- US-A1- 2003 050 736
- US-A1- 2004 226 959

## Description

This invention relates to a process for automatically performing consecutive experiments in a reaction vessel, in particular in a high throughput reaction vessel.

Over recent years the advent of combinatorial methods in materials science and of high throughput chemistry techniques, and in particular the growing use of robots and computers to automate catalyst and materials preparation and testing, has allowed researchers to potentially test tens to hundreds to thousands or more catalysts and materials in parallel. Much effort has gone in to developing preparation and testing apparatus for numerous types of materials and material properties (for example US 5,776,359) and, in particular, for chemical reactions of interest (for example see US 5,959,297, US 6,063,633 and US 6,306,658). However as the number of experiments it may be possible to run in parallel has increased so the bottlenecks in catalyst testing have shifted. For example, collecting, handling and storing of experimental data has become an increasingly important area. As a further example, where a researcher had previously to only make, load and test a few catalysts a day or even in a week, the researcher now has to make a much larger number of catalysts to perform the tests on. For high throughput testing of polymerisation processes, in addition to the above issues, the scale (i.e. volume of polymer material produced) has also generally decreased inversely to the increase in number of parallel experiments, giving corresponding difficulties in the handling of the materials produced.

Because of the relatively small scale of high throughput testing, it is increasingly important to control factors which may influence the results obtained. One such factor which is especially important for high throughput experimentation, where a single reaction vessel may be used for a number of experiments consecutively, is to reduce contamination from previous experiments. Such contamination can occur, for example, if a blockage occurs in the reaction vessel outlet.

Although some contamination can be at least partially analysed for (as with other variables), and hence allowed for, using suitable experimental design techniques, they can also be unpredictable in magnitude, and it is preferable to reduce their incidence in the first place.

WO 01/36087 describes a system and method for examining chemical reactions, especially polymerisation reactions. The system is highly automated, and, in a preferred embodiment includes an automated cleaning step for the reaction vessel. However, although WO 01/36087 acknowledges the need to clean the reaction vessel it does not address how to reduce issues of contamination due to blockages in the reaction vessel outlet.

WO 2004/062792 relates to a process and assembly for simultaneously evaluating a plurality of catalysts wherein the flow rate of a reactive fluid to each of a plurality of reactors is automatically adjusted based on the measured amount of catalyst sample in each reactor to concurrently obtain a substantially identical fluid space velocity in each of the reactors.

WO 02/053273 relates to a process and apparatus for blending and distributing a slurry solution. The weight of a blending tank may be measured to ensure it is empty.

US 4,627,506 relates to a batch weighing apparatus for receiving a flow of material and discharging the material in successive weight determined portions.

WO 2004/078330 describes a stirring apparatus and its method of use. The apparatus may be a high throughput system comprising a number of reaction vessels in parallel, and the stirrer in each vessel helps prevent blockages of the outlet of the vessel in which the high throughput reaction occurs. Thus, WO 2004/078330 acknowledges the need to remove all the material in a reaction vessel before a subsequent experiment. However, although WO 2004/078330 addresses the issue of blockages, no control method is provided in case the reaction vessel outlet nevertheless becomes blocked.

Thus, it is still desired to provide a robust control method to highlight blockages in the outlet of a high throughput reaction vessel.

Thus, according to the first aspect of the present invention there is provided an automated process for performing two or more consecutive reactions in a reaction vessel, which process provides a mass-based method for checking that the material in the reaction vessel has unloaded effectively without blockages, said reaction vessel comprising an outlet at the base of said reaction vessel, and said process comprising:
i) performing a first reaction is said reaction vessel, said first reaction being a batch or semi-batch reaction comprising reacting one or more first reactants in the presence of a first catalyst,
ii) unloading the reaction vessel of material therein through the outlet at the base of said reaction vessel and into a collecting vessel, said unloading including washing the reaction vessel through with a suitable liquid,
iii) weighing the collecting vessel with the material therein,
iv) calculating the mass of material collected,
v) comparing the expected mass of material from the reaction to the value from step (iv), said expected mass including any liquid used to unload the material from the reaction vessel in step (ii), and
vi) if the values correlate, subsequently performing a second reaction in said reaction vessel, said second reaction being a batch or semi-batch reaction comprising reacting one or more second reactants in the presence of a second catalyst.

The process of the present invention provides a mass-based (weight-based) method for checking that the material in the reaction vessel has unloaded effectively i.e. without blockages.

The process of the present invention is automated, such that consecutive reactions may be performed without requiring a manual check by an operator. Typically, any loading of materials into the reaction vessel, the reaction itself, the unloading of material from the reaction vessel, any manipulation (movement) or weighing of the collection vessel, and any calculations are automated. One or more suitable robots, such as, a suitable dispensing robot, may be used as required.

The entire process may be under the control of a single computer.

As well as mitigating potential contamination of an experiment by a previous one, the process of the present invention can also have safety benefits for the overall process since it can ensure that a reaction vessel which has not emptied properly from one experiment is not subsequently over-filled by addition of material for a subsequent experiment.

The unloading of material from the reaction vessel in step (ii) may be by any suitable technique. In one embodiment, this may comprise simply opening a suitable valve on the reaction vessel outlet. A pressure may be applied to facilitate unloading, which may use the pressure of reaction if is above atmospheric pressure and/or may comprise applying a pressure using a separate gas feed.

The unloading is facilitated by washing the reaction vessel through with a suitable liquid, which may also be performed at pressure.

In addition, unloading may be facilitated using an apparatus comprising a stirrer as described in WO 2004/078330.

The collecting vessel and material therein may be automatically weighed using any suitable weighing station. The calculation of the mass of material collected can be performed simply by subtracting the mass of the empty collecting vessel from the weighed mass. A pre-determined collection vessel mass may be used, such as a previously measured mass or an average mass from a number of collection vessels. The mass of the empty collecting vessel is preferably obtained by weighing the vessel when empty a short time prior to filling with material from the reaction vessel.

In step (v) of the process of the present invention, the expected mass of material from the reaction is compared to the mass actually measured in step (iv).

The expected mass of material from the reaction can be readily calculated from knowledge of the amount of materials added to the reaction vessel before and during the experiment. Typically, this will include catalyst materials, any reaction media, and the total mass of reactants added. It also includes any liquid which is used to unload material from the reaction vessel in step (ii). The calculation need not generally include any gas which is added to the reaction vessel to pressurise the reaction vessel (which may be an inert gas or a reactant gas), but should include gaseous reactants which are incorporated into solid or liquid products during the reaction. For example, for a polymerisation reaction involving polymerisation of ethylene, the polymerisation reaction is typically performed by adding gaseous ethylene to the reaction vessel to maintain the reaction pressure as ethylene polymerises, and the calculation of the expected mass should include gas fed to the reaction to maintain the pressure, but not any gas used to pressurise the reaction vessel initially.

Similarly, for reactions where gases are produced, the amount of gas produced can be calculated using pressure rise in the reaction vessel or, where the pressure is kept constant, by measuring the flow of gas released.

Where a gaseous (or other) reactant is added to the reaction vessel during the reaction, it may also be possible to monitor the total amount of material added to the reaction vessel and use this as a control method to determine when the reaction should be stopped e.g. quenched. This can be used to ensure that not too much material is added to the reaction vessel in a single experiment.

The comparison of step (v) involves checking that the two numbers are consistent with each other, and hence, that the reaction vessel has unloaded correctly i.e. without a blockage. If this is the case i.e. if the numbers correlate, the reaction vessel is loaded with new material (such as catalyst materials, reaction media, reactants) and a second reaction performed. Generally, the weighed mass of material collected should be from 80% to 120% of that expected, preferably between 90% and 100% of that expected. Small differences may be expected due to inherent errors when a small scale of materials is used and/or if, for example, volatile liquids are present.
The mass-based checking of the expected versus the actual mass of sample obtained from the reaction vessel according to the process of the present invention may be used in addition to one or more other techniques. For example, the method of the present invention may be supplemented by occasional visual checking of reactors between runs, either manually or automatically, for example using a suitable electronic technique, such as a camera, by using a liquid level probe or by trying to pressurise a reaction vessel with the outlet valve open.

Although such techniques are generally less suitable for use on a regular basis, such techniques may be used on a periodic basis and/or may be used to check the reaction vessel further where the mass-based checking process of the present invention highlights a discrepancy in the amount of sample recovered. Manual visual checking, for example, requires operator intervention, and visual checking generally (i.e. manual or automatically) typically requires the reaction vessel to be opened, for example, by opening a suitable inspection port on the reaction vessel. Liquid level probes also typically require the reaction vessel to be opened, and both these and pressure testing may require a significant blockage of the outlet pipe before anything is detected.

The first reaction may be any suitable batch or semi-batch reaction, and the one or more first reactants and first catalyst will be selected accordingly.

The second reaction may also be any suitable batch or semi-batch reaction, and the one or more second reactants and second catalyst will be selected accordingly.

Typically, the first and second reactions will be the same type of reaction e.g. polymerisation reactions, and one or more of the catalyst, one or more reactants or one or more other reaction variables, such as temperature, pressure or reaction time, will be different for the second reaction, although it is also possible that the second reaction will be identical to the first reaction in all aspects, for example, for testing reproducibility of the apparatus.

The reaction vessel is preferably one of a plurality (an array) of high throughput reaction vessels, such as 8 or more, for example 16 or more reaction vessels, which can operate reactions in parallel.

The reaction vessel is preferably a polymerisation reaction vessel for performing (as the first and second reactions) gas phase or slurry phase polymerisation reactions, and most preferably, one of a plurality (an array) of high throughput reaction vessels for performing such polymerisation reactions.

Where the reaction vessel is one of a plurality of high throughput reaction vessels for performing such polymerisation reactions, the polymer samples from the (each) reaction vessel are generally less than 50g (washed and dried weight), and more typically less than 25g, such as in the range 2 -25g, preferably in the range 10 - 20g.

The polymer product (and other materials) in the high throughput polymerisation reaction vessel are preferably unloaded by washing from the reaction vessel with a (known mass) of a suitable rinse liquid. Where the first reaction is a gas phase polymerisation reaction, for example, the reaction may have been performed in the presence of a water soluble salt, and hence, in addition to the polymer product and any rinse liquid, the materials collected in the collection vessel will comprise said salt.

Generally, the collection vessel for such processes will be sized hold a total volume of 1000ml or less, and more typically 500 ml or less, although vessels capable of holding significantly larger volumes than this may also be used. Preferably, the collection vessel can be sized to hold a total volume in the range 20-500ml, preferably in the range 200-450ml.

The collection vessel may be reusable or may be single use (disposable).

Preferably the body of the collection vessel is made of plastic or similar non-costly material.

## Claims

1. An automated process for performing two or more consecutive reactions in a reaction vessel which process provides a mass-based method for checking that the material in the reaction vessel has unloaded effectively without blockages, said reaction vessel comprising an outlet at the base of said reaction vessel, and said process comprising:
i) performing a first reaction is said reaction vessel, said first reaction being a batch or semi-batch reaction comprising reacting one or more first reactants in the presence of a first catalyst,
ii) unloading the reaction vessel of material therein through the outlet at the base of said reaction vessel and into a collecting vessel, said unloading including washing the reaction vessel through with a suitable liquid,
iii) weighing the collecting vessel with the material therein,
iv) calculating the mass of material collected,
v) comparing the expected mass of material from the reaction to the value from step (iv), said expected mass including any liquid used to unload the material from the reaction vessel in step (ii), and
vi) if the values correlate, subsequently performing a second reaction in said reaction vessel, said second reaction being a batch or semi-batch reaction comprising reacting one or more second reactants in the presence of a second catalyst.

2. The process according to claim 1, wherein the expected mass of material from the reaction and the value from step (iv) correlate if the weighed mass of material collected is from 80% to 120% of that expected.

3. The process according to claim 1 or claim 2, wherein the first and second reactions are the same type of reaction.

4. The process according to claim 3, wherein the first and second reactions are the same type of reaction, and one or more of the catalyst, one or more reactants or one or more other reaction variables, such as temperature, pressure or reaction time, are different for the second reaction.

5. The process according to any one of the preceding claims, wherein the first reaction and the second reaction are polymerisation reactions, and the reaction vessel is a polymerisation reaction vessel for performing gas phase or slurry phase polymerisation reactions.

6. The process according to any one of the preceding claims wherein the reaction vessel is one of a plurality (an array) of high throughput reaction vessels which can operate reactions in parallel.

7. The process according to any one of the preceding claims wherein the reaction vessel is one of a plurality of high throughput reaction vessels for performing polymerisation reactions, and the polymer samples from the (each) reaction vessel are generally less than 50g (washed and dried weight), and more typically less than 25g, such as in the range 2 -25g, preferably in the range 10 - 20g.

## Patentansprüche

1. Automatisiertes Verfahren zur Durchführung von zwei oder mehr aufeinanderfolgenden Reaktionen in einem Reaktionsgefäß, wobei das Verfahren eine auf der Masse basierende Methode liefert, um zu überprüfen, dass das Material in dem Reaktionsgefäß effektiv ohne Blockierungen ausgetragen wurde, wobei das Reaktionsgefäß einen Auslass an der Basis des Reaktionsgefäßes umfasst, wobei das Verfahren Folgendes umfasst:
i) Durchführen einer ersten Reaktion in dem Reaktionsgefäß, wobei die erste Reaktion eine diskontinuierliche oder halbkontinuierliche Reaktion ist, die das Umsetzen von einem oder mehreren ersten Reaktanten in Gegenwart eines ersten Katalysators umfasst;
ii) Austragen des Materials aus dem Reaktionsgefäß durch den Auslass an der Basis des Reaktionsgefäßes in ein Auffanggefäß, wobei das Austragen das Durchspülen des Reaktionsgefäßes mit einer geeigneten Flüssigkeit umfasst;
iii) Wiegen des Auffanggefäßes mit dem darin enthaltenen Material;
iv) Berechnen der Masse des aufgefangenen Materials;
v) Vergleichen der erwarteten Masse des Materials aus der Reaktion mit dem Wert aus Schritt (iv), wobei die erwartete Masse die gesamte Flüssigkeit umfasst, die zum Austragen des Materials aus dem Reaktionsgefäß in Schritt (ii) verwendet wurde; und
vi) wenn die Werte korrelieren, anschließend Durchführen einer zweiten Reaktion in dem Reaktionsgefäß, wobei die zweite Reaktion eine diskontinuierliche oder halbkontinuierliche Reaktion ist, die das Umsetzen von einem oder mehreren zweiten Reaktanten in Gegenwart eines zweiten Katalysators umfasst.

2. Verfahren gemäß Anspruch 1, wobei die erwartete Masse des Materials aus der Reaktion und der Wert aus Schritt (iv) korrelieren, wenn die gewogene Masse des aufgefangenen Materials 80% bis 120% der erwarteten Masse beträgt.

3. Verfahren gemäß Anspruch 1 oder 2, wobei die erste und die zweite Reaktion demselben Reaktionstyp angehören.

4. Verfahren gemäß Anspruch 3, wobei die erste und die zweite Reaktion demselben Reaktionstyp angehören und der Katalysator, ein oder mehrere Reaktanten und/oder eine oder mehrere andere Reaktionsvariablen, wie Temperatur, Druck oder Reaktionszeit, für die zweite Reaktion unterschiedlich sind.

5. Verfahren gemäß einem der vorstehenden Ansprüche, wobei die erste Reaktion und die zweite Reaktion Polymerisationsreaktionen sind und das Reaktionsgefäß ein Polymerisationsreaktionsgefäß zum Durchführen von Gasphasen- oder Suspensionsphasen-Polymerisationsreaktionen ist.

6. Verfahren gemäß einem der vorstehenden Ansprüche, wobei das Reaktionsgefäß eines aus einer Vielzahl (einer Batterie) von Hochdurchsatz-Reaktionsgefäßen ist, die Reaktionen parallel durchführen können.

7. Verfahren gemäß einem der vorstehenden Ansprüche, wobei das Reaktionsgefäß eines aus einer Vielzahl von Hochdurchsatz-Reaktionsgefäßen zum Durchführen von Polymerisationsreaktionen ist und die Polymerproben aus dem (jedem) Reaktionsgefäß im Allgemeinen weniger als 50 g (gewaschen und getrocknet) und typischerweise weniger als 25 g betragen, zum Beispiel im Bereich von 2 bis 25 g, vorzugsweise im Bereich von 10 bis 20 g liegen.

## Revendications

1. Procédé automatisé pour effectuer deux réactions consécutives ou plus dans une cuve de réaction, lequel procédé fournit un procédé basé sur la masse pour vérifier que le matériau dans la cuve de réaction s'est déchargé de manière efficace sans blocage, ladite cuve de réaction comprenant un orifice de sortie à la base de ladite cuve de réaction, et ledit procédé comprenant :
i) la réalisation d'une première réaction dans ladite cuve de réaction, ladite première réaction étant une réaction discontinue ou semi-discontinue comprenant la réaction d'un ou plusieurs réactifs en présence d'un premier catalyseur,
ii) le déchargement de la cuve de réaction du matériau à l'intérieur par l'orifice de sortie à la base de ladite cuve de réaction et dans une cuve de collecte, ledit déchargement comprenant le lavage de la cuve de réaction avec un liquide approprié,
iii) la pesée de la cuve de collecte avec le matériau à l'intérieur,
iv) le calcul de la masse du matériau collecté,
v) la comparaison de la masse attendue de matériau de la réaction avec la valeur de l'étape (iv), ladite masse attendue comprenant un liquide quelconque utilisé pour décharger le matériau de la cuve de réaction à l'étape (ii), et
vi) si les valeurs correspondent, la réalisation d'une seconde réaction dans ladite cuve de réaction, ladite seconde réaction étant une réaction discontinue ou semi-discontinue comprenant la réaction d'un ou plusieurs seconds réactifs en présence d'un second catalyseur.

2. Procédé selon la revendication 1, dans lequel la masse attendue de matériau de la réaction et la valeur de l'étape (iv) correspondent si la masse pesée de matériau collecté va de 80 % à 120 % de celle attendue.

3. Procédé selon la revendication 1 ou la revendication 2, dans lequel les première et seconde réactions sont le même type de réaction.

4. Procédé selon la revendication 3, dans lequel les première et seconde réactions sont le même type de réaction, et un ou plusieurs du catalyseur, un ou plusieurs réactifs ou une ou plusieurs autres variables de réaction, telles que la température, la pression ou le temps de réaction, sont différents pour la seconde réaction.

5. Procédé selon l'une quelconque des revendications précédentes, dans lequel la première réaction et la seconde réaction sont des réactions de polymérisation, et la cuve de réaction est une cuve de réaction de polymérisation pour réaliser des réactions de polymérisation en phase gazeuse ou en phase de suspension.

6. Procédé selon l'une quelconque des revendications précédentes, dans lequel la cuve de réaction est l'une d'une pluralité (un ensemble) de cuves de réaction à haut débit qui peut opérer des réactions en parallèle.

7. Procédé selon l'une quelconque des revendications précédentes, dans lequel la cuve de réaction est l'une d'une pluralité de cuves de réaction à haut débit pour réaliser des réactions de polymérisation, et les échantillons de polymère de la (chaque) cuve de réaction sont généralement inférieurs à 50 g (lavés et séchés), et plus typiquement inférieurs à 25 g, tels que dans la plage de 2 à 25 g, de préférence dans la plage de 10 à 20 g.
